# EUROPÄISCHE PATENTSCHRIFT

(11) **EP 2 121 397 B1**
(45) Veröffentlichungstag und Bekanntmachung des Hinweises auf die Patenterteilung: **01.05.2013**
(21) Anmeldenummer: 08707482.9
(22) Anmeldetag: 01.02.2008
(51) Int. Cl.: B60T 13/26, B60T 13/38, B60T 13/68

(54) **FESTSTELLBREMSMODUL FÜR DRUCKMITTELBETRIEBENE BREMSANLAGE**
PARKING BRAKE MODULE FOR A PRESSURE MEDIUM-OPERATED BRAKE SYSTEM
MODULE FREIN DE STATIONNEMENT POUR DISPOSITIF DE FREINAGE ACTIONNÉ PAR FLUIDE SOUS PRESSION

(30) Priorität: 21.02.2007 DE 102007008504
(43) Veröffentlichungstag der Anmeldung: 25.11.2009
(73) Patentinhaber: WABCO GmbH, 30453 Hannover (DE)
(72) Erfinder: BENSCH, Uwe, 30161 Hannover (DE); DIEKMEYER, Heinrich, 30890 Barsinghausen (DE); HELMER, Jörg, Birmingham, MI 48009 (DE); KIEL, Bernd-Joachim, 31515 Wunstorf (DE); SCHÄL, Andreas, 31171 Nordstemmen (DE); VAN SON, Frank, NL-5045 KZ Tilburg (NL)
(74) Vertreter: Lauerwald, Jörg
(86) Internationale Anmeldenummer: PCT/EP2008/000796
(87) Internationale Veröffentlichungsnummer: WO 2008/101592

(56) Entgegenhaltungen:
- EP-A- 0 268 045
- DE-A1- 3 444 639
- DE-B3-102005 019 479

## Beschreibung

Die Erfindung betrifft ein Feststellbremsmodul für eine druckmittelbetriebene Bremsanlage eines Fahrzeuges mit einer Feststellbremsfunktion gemäß dem Oberbegriff des Patentanspruchs 1.

Ein derartiges Feststellbremsmodul ist aus DE 103 36 611 A1, insbesondere Fig. 8, bekannt. Dieses Modul weist mehrere Ventile bzw. Ventileinrichtungen auf, welche überwiegend elektrisch betätigbar sind. Das Feststellbremsmodul ist einerseits mit einem Druckluftvorratsbehälter verbunden. Andererseits führt eine erste Druckluftleitung zu einem Federspeicherteil eines Federspeicherbremszylinders, der als kombinierter Federspeicher-/Membranbremszylinder ausgebildet sind. Derartige kombinierte Bremszylinder weisen neben der Funktion von Membranbremszylindern zusätzlich eine Federspeicherfunktion auf. Die Bremszylinder umfassen je einen Membranteil, welcher pneumatisch mit der Betriebsbremsanlage verbunden und mit dem eigentlichen Bremsdruck beaufschlagbar ist. Ferner umfassen derartige Bremszylinder je einen Federspeicherteil, welcher pneumatisch von dem Membranteil getrennt und über gesonderte Druckluftleitungen mit Druckluft beaufschlagbar ist.

Der Federspeicherteil setzt die Federspeicherfunktion um, indem bei Druckluftbeaufschlagung des Federspeicherteils eine Speicherfeder vorspannt und dabei eine Bremswirkung der Federspeicher verringert wird. Bei einer Entlüftung des Federspeicherteils entspannt sich die Speicherfeder, so dass eine Bremswirkung im Rahmen der Federspeicherfunktion auf die mit dem jeweiligen Bremszylinder verbundene Bremse ausgeübt wird. Bremszylinder dieses Typs werden nachfolgend als Federspeicherbremszylinder bezeichnet. Mittels solcher Federspeicherbremszylinder ist eine Feststellbremsfunktion möglich, die auch bei Fehlen von Druckluft eine Bremsung bzw. ein Feststellen des Fahrzeugs ermöglicht.

Das o.g. Feststellbremsmodul weist eine weitere Verbindung zu einem Anhängersteuerventil auf. Mittels des Anhängersteuerventils erfolgt die Bremsdrucksteuerung eines ankoppelbaren Anhängerfahrzeugs, wobei nachfolgend hierunter auch ein Auflieger verstanden wird. Das Anhängersteuerventil weist einen Anschluss für eine zum Anhängerfahrzeug führende Steuerleitung der Anhänger-Betriebsbremse auf. Das Anhängersteuerventil invertiert den an seinem Eingang anliegenden Druck. D.h. wenn an seinem vom Feststellbremsmodul kommenden Eingang ein hoher Druck anliegt, wird ein niedriger Betriebsbremsdruck ausgesteuert und umgekehrt.

Das Feststellbremsmodul weist eine erste Ventileinrichtung, nämlich ein Relaisventil, sowie eine zweite Ventileinrichtung, ein Haltenventil und ein Bistabilventil auf. Das Relaisventil umfasst einen Einlass, der mit einem Druckluftvorratsbehälter verbindbar ist. Ferner weist das Relaisventil einen Auslass auf, der mit wenigstens einem Federspeicherteil eines Federspeicherbremszylinders verbindbar ist. Das Relaisventil umfasst auch einen Steuereingang. Der am Steuereingang anliegende Druck wird am Auslass des Relaisventils ausgesteuert, jedoch mit einer wesentlich größeren Luftmenge. Auf diese Weise können die erforderlichen Volumina zur Betätigung der Federspeicherbremszylinder zur Verfügung gestellt werden.

Der am Steuereingang des Relaisventils anliegende Steuerdruck ist unter Zuhilfenahme eines Haltenventils und eines Bistabilventils einstellbar. Auf diese Weise ist auch der Druck am Auslass des Relaisventils einstellbar.

Die zweite Ventileinrichtung besteht aus einem 3/2-Wege-Magnetventil. Ein erster Anschluss dieses 3/2-Wege-Magnetventils führt zur zum Anhängersteuerventil führenden Leitung. Ein zweiter Anschluss dieses Ventils ist mit dem Auslass des Relaisventils verbunden. Ein dritter Anschluss ist mit dem Druckluftvorratsbehälter verbindbar. In einem unbestromten Zustand verbindet dieses 3/2-Wege-Magnetventil den ersten mit dem zweiten Anschluss, während der erste Anschluss gegen den dritten Anschluss abgesperrt ist. In einem bestromten Zustand ist dagegen der erste Anschluss gegen den zweiten Anschluss abgesperrt und der erste Anschluss mit dem dritten Anschluss verbunden.

Somit wird in einem bestromten Zustand dieses 3/2-Wege-Magnetventils das Anhängersteuerventil belüftet und auf diese Weise die Anhängerbremse gelöst. Ein Belüften des Anhängersteuerventils an diesem Anschluss führt nämlich zu einem Absenken des Betriebsbremsdruckes am Ausgang des Anhängersteuerventils, so dass der Anhängerbremsdruck abfällt und somit die Anhängerbremse gelöst wird.

In einem unbestromten Zustand ist Jedoch der Druck Im Anhangersteuerventll identisch mit dem Druck am Auslass des Relaisventils und somit identisch mit dem Druck im Federspeicherteil eines Federspeicherbremszylinders.

Die beschriebene pneumatische Schaltungsanordnung führt jedoch dazu, dass es nicht möglich ist, den Anhänger einzubremsen, während das Zugfahrzeug ungebremst ist. Eine sog. Streckbremsfunktion ist daher mit diesem bekannten Feststellbremsmodul nicht realisierbar.

Derartige Feststellbremssysteme werden in unterschiedlichen Fahrzeugregelsystemen eingesetzt, wie z.B. elektronischen Bremssystemen, Antiblockiersystemen, oder Systemen ohne Antiblockierschutz. Das Feststellbremsmodul ist an diese unterschiedlichen Fahrzeugregelsysteme anzupassen. Es wird daher in unterschiedlichsten Ausführungen hergestellt. Hierdurch reduziert sich jedoch die jeweilige Stückzahl eines bestimmten Feststellbremsmodultyps. Eine reduzierte Stückzahl erhöht jedoch die Herstell-, Verwaltungs- und Lagerkosten.

Ein anderes Feststellbremssystem ist aus EP 0 268 045 A2 bekannt, die eine elektropneumatische Bremseinrichtung für Fahrzeuge zeigt. Dabei wird elektropneumatisch ein Betriebsbremsdruck und pneumatisch ein Feststellbremsdruck ausgesteuert. Mittels des Feststellbremsdrucks kann einerseits ein Federspeicherbremszylinder zum Einlegen der Feststellbremse eines Zugfahrzeugs betätigt werden. Andererseits kann mittels des Feststellbremsdrucks ein Anhängersteuerventil zum Einlegen von Bremsen eines angekoppelten Anhängers angesteuert werden. Mittels eines 3/2-Wege-Elektromagnetventils kann der Federspeicherbremszylinder im Fahrbetrieb unabhängig von einem mittels eines Bremspedals ausgesteuerten Bremsdruck mit einem Vorratsluftdruck belüftet werden. Mittels eines mechanisch betätigbaren Ventils lassen sich zudem Druckluftleitungen zum Anhängersteuerventil und zum Federspeicherbremszylinder zugleich entlüften. Mittels eines weiteren mechanischen Ventils kann die Druckluftleitung zum Anhängersteuerventil jedoch kurzzeitig belüftet werden, um zu testen, ob die Feststellbremse des Zugfahrzeugs in der Lage ist, auch den ungebremsten Anhänger mit zu halten. Eine elektropneumatische Feststellbremseinrichtung oder eine Feststellbremseinrichtung, mit der eine Streckbremsfunktion möglich wäre, zeigt EP 0 268 045 A2 nicht.

Eine Motorfahrzeug-Druckluftanlage mit einer wiederum anderen Bremsanlage ist aus DE 34 44 639 A1 bekannt. Insbesondere weist diese Motorfahrzeug-Druckluftanlage eine Bremsanlage mit einem Betriebsbremskreis und mit einem Parkbremskreis auf. Federspeicherbremszylinder eine Parkbremse werden dabei über ein Relaisventil eingelegt, das von einem mechanisch betätigbaren Parkbremsventil angesteuert wird. Ferner ist bei dieser bekannten Bremsanlage ein Absperrventil für eine Anhängerbremse vorgesehen, das zum einen eine mechanische Ziehknopfbetätigung und zum anderen eine pneumatische Betätigung aufweist. Insbesondere wird das Absperrventil für die Anhängerbremse automatisch pneumatisch betätigt, wenn die Parkbremse am Zugfahrzeug eingelegt wird. Das Anhängersteuerventil wird hierbei über eine druckgesteuerte Schalteinrichtung mit Druckluft versorgt, wobei das Anhängersteuerventil über diese druckgesteuerte Schalteinrichtung mit einer Versorgungsleitung verbunden ist, die auch das Absperrventil für die Anhängerbremse mit Druckluft versorgt. Die Druckluftversorgung des Anhängersteuerventils muss somit nicht über eine Fahrzeugkabine erfolgen, in der das Absperrventil für die Anhängerbremse vorzugsweise angeordnet ist. Eine Streckbremsfunktion wird durch Betätigung eines Handbremsventils bereitgestellt. DE 34 44 639 A1 zeigt keine elektropneumatische Parkbremseinrichtung.

Der Erfindung liegt daher das Problem zugrunde, ein einziges Ventilkonzept für ein Feststellbremsmodul für verschiedene Fahrzeugkonfigurationen bereitzustellen, insbesondere ein Ventilkonzept, das auch eine Streckbremsfunktion ermöglicht.

Die Erfindung löst dieses Problem mittels eines Feststellbremsmoduls gemäß Anspruch 1.

Erfindungsgemäß ist vorgesehen, dass ein am ersten Anschluss der zweiten Ventileinrichtung herrschender Druck, d.h. der zum Anhängersteuerventil geführte Druck unabhängig vom Druck im Druckmittelvorratsbehälter sowie vom Druck am Auslass der druckmittelmengenverstärkenden Ventileinrichtung herrschenden Druck, d.h. unabhängig vom Druck im Federspeicherteil der Federspeicherbremszylinder einstellbar ist. Die Erfindung ermöglicht somit eine Entkopplung der Federspeicher und des Anhängersteuerventils.

Durch die Möglichkeit, den Druck zum Anhängersteuerventil unabhängig vom Druck zu den Federspeicherbremszylindern einzustellen, kann der Anhänger eingebremst werden, während das Zugfahrzeug ungebremst ist. Auf diese Weise ist auch eine Streckbremsfunktion realisierbar.

Des weiteren erlaubt ein derartiges Konzept auch eine Anhängerkontrollstellung, insbesondere bei ABS-Fahrzeugen. Ferner ermöglicht die Erfindung auch die Umsetzung einer Basisparkbremsfunktion und einer Hill-Holder-Funktion, d.h. einer Funktion, bei der ein Fahrzeug auch ohne Betätigung des Bremspedals gebremst gehalten wird. Bei einer derartigen Funktion sind besondere Sicherungsvorkehrungen vorzusehen, damit das Fahrzeug nicht unbeabsichtigt wegrollt.

Das erfindungsgemäße Feststellbremsmodul kann in nahezu allen Fahrzeugen mit beliebigen Fahrzeugregelsystemen, wie Fahrzeugen mit elektronischem Bremssystem, Antiblockiersystem oder ohne Antiblockierschutz eingesetzt werden, wobei vielfältige Funktionen einer Feststellbremse erreicht werden können, ohne dass das Feststellbremsmodul bei Minimalanforderungen überbestückt wäre.

Insgesamt stellt die Erfindung ein universelles Ventilkonzept für ein Feststellbremsmodul bereit, das vielfältige Funktionen in Fahrzeugen mit elektronischen Bremssystemen, Antiblockiersystemen oder ohne Fahrzeugregelsysteme umsetzen kann.

Weitere vorteilhafte Ausführungsformen ergeben sich aus den Unteransprüchen sowie aus den anhand der beigefügten Zeichnung näher erläuterten Ausführungsbeispielen. In der Zeichnung zeigt:
- Fig. 1: ein Feststellbremsmodul sowie weitere Bauteile einer Bremsanlage eines Fahrzeuges in einem ersten Ausführungsbeispiel gemäß der Erfindung;
- Fig. 2: das Feststellbremsmodul gemäß Fig. 1 in einem Zustand zur Erläuterung einer Parkbremsfunktion;
- Fig. 3: das Feststellbremsmodul gemäß Fig. 1 in einem Zustand zur Erläuterung einer Anhängerkontrollstellung;
- Fig. 4: das Feststellbremsmodul gemäß Fig. 1 in einem Zustand zur Erläuterung einer Streckbremsfunktion;
- Fig. 5: ein Feststellbremsmodul gemäß einem zweiten Ausführungsbeispiel der Erfindung;
- Fig. 6: das Feststellbremsmodul gemäß Fig. 5 in einem Zustand zur Erläuterung der Parkbremsfunktion;
- Fig. 7: das Feststellbremsmodul gemäß Fig. 5 in einem Zustand zur Erläuterung der Anhängerkontrollstellung;
- Fig. 8: ein Feststellbremsmodul gemäß Fig. 5 in einem Zustand zur Erläuterung der Streckbremsfunktion;
- Fig. 9: ein Feststellbremsmodul gemäß einem dritten Ausführungsbeispiel der Erfindung und
- Fig. 10: ein Feststellbremsmodul gemäß einem vierten Ausführungsbeispiel der Erfindung.

In den Figuren werden gleiche Bezugszeichen für einander entsprechende Teile verwendet. In den Figuren werden ferner Ausführungsbeispiele gezeigt, die in einer druckluftbetriebenen Bremsanlage, d.h. einer pneumatischen Bremsanlage verwendet werden. Insofern wird als Druckmittel Druckluft eingesetzt. Alternativ können die erläuterten Ausführungsbeispiele jedoch auch mit hydraulischen Systemen verwendet werden, wobei bspw. ein Hydrauliköl als Druckmittel benutzt wird.

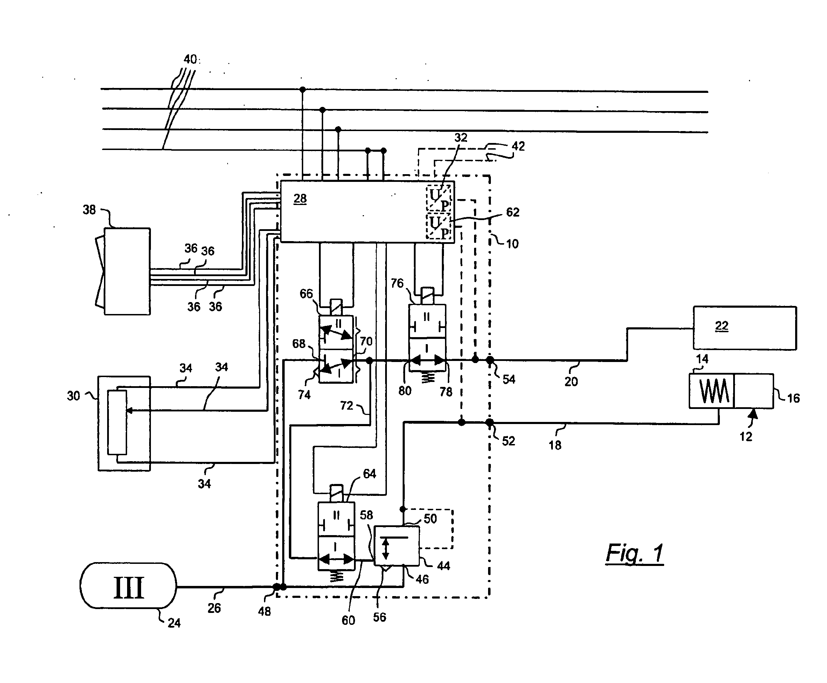

Fig. 1 zeigt ein Feststellbremsmodul 10 einer pneumatischen Bremsanlage für ein Fahrzeug, insbesondere Nutzfahrzeug oder Lastkraftwagen, welches mit einem Anhängerfahrzeug mit einem ebenfalls pneumatischen Bremssystem betrieben werden kann. Das dargestellte Feststellbremsmodul 10 befindet sich im Zugfahrzeug. Dieses Zugfahrzeug weist neben einer Betriebsbremse auch eine Feststellbremse auf, welche mittels Federspeicherbremszylindern 12 der eingangs erläuterten Art ausgeführt sind. D.h. der Federspeicherbremszylinder 12 weist einen Federspeicherteil 14 sowie einen Membranteil 16 für die Betriebsbremse auf. Um die Federspeicherbremse bzw. Feststellbremse zu lösen, muss der Federspeicherteil 14 belüftet werden. Diese Belüftung erfolgt Ober eine Druckluftleitung 18, welche an das Feststellbremsmodul 10 angeschlossen ist.

In allen Figuren ist jeweils nur ein Federspeicherbremszylinder 12 dargestellt. Derartige Federspeicherbremszylinder finden sich aber vorzugsweise an wenigstens den Rädern einer Achse oder aber auch mehrerer Achsen des Zugfahrzeuges (und ggf. auch des Anhängerfahrzeuges). Daher führt die Druckluftleitung 18 vorzugsweise nicht nur zu einem, sondern zu mehreren, d.h. wenigstens zwei Federspelcherbremszylindem, von denen jedoch nur einer dargestellt ist. Bei einem anderen Ausführungsbeispiel ist jedoch tatsächlich nur ein Federspeicherbremszylinder vorgesehen, der bspw. an einer Kardanwelle wirkt.

Das Feststellbremsmodul 10 weist ferner eine Verbindung über eine weitere Druckluftleitung 20 zu einem Anhängersteuerventil 22 auf, das zur Steuerung der Anhängerbremsen vorgesehen ist. Das Anhängersteuerventil 22 ist im Zugfahrzeug angeordnet. Das Anhängersteuerventil 22 arbeitet wie in der eingangs erläuterten Weise. Auf diese Erläuterungen, insbesondere in Bezug auf Federspeicherbremsen und Anhängersteuerventile wird hiermit Bezug genommen.

Das Feststellbremsmodul 10 ist ferner über eine weitere Druckluftleitung 26 mit einem Druckluftvorratsbehälter 24 verbunden. Dieser Druckluftvorratsbehälter 24 stellt dem Feststellbremsmodul 10 Druckluft zur Verfügung, welche das Feststellbremsmodul 10 über die Druckluftleitung 18 dem Federspeicherbremszylinder 12 bzw. über die Druckluftieftung 20 dem Anhangersteuerventll 22 zuführen kann.

Die Art und Weise, wie Druckluft dem Federspeicherbremszylinder 12 bzw. dem Anhängersteuerventil 22 zugeführt oder auch von dort abgeführt werden kann, wird Ober eine elektrische Steuereinheit 28 bestimmt, die im Feststellbremsmodul 10 oder in einer separaten Einheit angeordnet ist. Diese elektrische Steuereinheit 28 ist zum Empfang elektrischer Signale von externen und internen Bauteilen ausgebildet Bspw. empfängt die elektrische Steuereinheit 28 ein elektrisches Betätigungssignal für die Anhängerbrernse von einer elektrischen Betätigungseinheit 30 für die Anhängerbrernse. Diese elektrische Betätigungseinheit 30 ist vorzugsweise im Fahrerhaus des Zugfahrzeuges angeordnet und bspw. als manuell betätigbares Bedienelement ausgebildet.

Mittels dieser elektrischen Betätigungseinheit kann ein Stellsignal für die Anhängerbremse erzeugt werden. Das Stellsignal kann insbesondere entweder einen gewünschten Bremsdruck oder aber eine Fahrzeugverzögerung repräsentieren. Um eine diesem Stellsignal entsprechende Regelung bereitzustellen, wird der Druck an das Anhängersteuerventil 22 mittels eines im oder außerhalb vom Feststellbremsmodul 10 angeordneten Drucksensors 32 gemessen, der den Druck in der Druckluftleitung 20 und damit den Druck, der dem Anhängetsteuerventil 22 zugeführt wird, ermitteln kann.

Sofern mittels der Betätigungseinheit 30 ein Verzögerungswunsch vorwählbar ist, muss die elektrische Steuereinheit 28 auf einen Fahrzeugverzögerungswert zurückgreifen können, der bspw. von einem mittels bspw. Radgeschwindigkeitssensoren erhaltenen Fahrzeuggeschwindigkeitswert abgeleitet wird.

Die elektrische Betätigungseinheit 30 ist über elektrische Leitungen 34 mit der elektrischen Steuereinheit 28 verbunden, um entsprechende Signale auszutauschen.

Die elektrische Steuereinheit 28 ist ferner über elektrische Leitungen 36 mit einem Bedienelement 38 zum Betätigen einer Anhängerkontrollfunktion verbunden. Dieses Bedienelement 38 ist ebenfalls im Fahrerhaus des Zugfahrzeuges untergebracht.

Zwar zeigt Fig. 1 jeweils mehrere elektrische Leitungen 34 bzw. 36, welche mit der elektrischen Steuereinheit 28 verbunden sind. Es reicht jedoch eine einzelne Signalleitung aus, welche mit der elektrischen Steuereinheit verbunden ist. Als Masseleitung kann auch die Fahrzeugkarosserie benutzt werden.

Anstelle einer elektrischen Signalübertragung von der Betätigungseinheit 30 für die Anhängerbremse bzw. von dem Bedienelement 38 für die Anhängerkontrollfunktion kann auch eine entsprechende Signalübertragung per Funk zur elektrischen Steuereinheit 28 vorgesehen sein.

Die elektrische Steuereinheit 28 ist ferner mit weiteren elektrischen Leitungen 40 zur elektrischen Energieversorgung sowie zur Verbindung mit anderen Systemen verbunden.

Die elektrische Steuereinheit 28 ist mittels eines Datenbusses mit Datenleitungen 42 zum Datenaustausch mit weiteren Komponenten verbunden.

Die elektrische Steuereinheit 28 dient zur elektrischen Betätigung von elektrisch betätigbaren Ventilen bzw. Ventileinrichtungen in dem Feststellbremsmodul 10. Das Feststellbremsmodul 10 weist insbesondere eine erste, luftmengenverstärkende Ventileinrichtung in Form eines Relaisventils 44 auf. Das Relaisventil 44 umfasst einen Einlass 46. der mit einem Anschluss 48 für den Druckluftvorratsbehälter 24 verbunden ist. Das Relaisventil 44 weist ferner einen Auslass 50 auf, der mit einem Anschluss 52 des Feststeltbremsmoduls 10 verbunden ist. Der Anschluss 52 ist mit der Druckluftleitung 18 zum Federspeicherbremszylinder 12 verbindbar. Ferner weist das Feststellbremsmodul 10 einen weiteren Anschluss 54 auf, der mit der Druckluftleitung 20 mit dem Anhängersteuerventil 22 verbindbar ist.

Das Relaisventil 44 umfasst ferner eine schematisch dargestellte Entlüftung 56, Ober die Druckluft entweichen kann. Vorzugsweise wird die Entlüftung 56 sowie weitere Entlüftungen weiterer Ventile mit einer gemeinsamen Entlüftungseinrichtung verbunden, Ober welche die Druckluft dann zentral in die Atmosphäre entweichen kann.

Das Relaisventil 44 weist ferner einen Steuereingang 58 auf, Ober den ein Steuerdruck Ober eine Steuerleitung 60 dem Relaisventil 44 zugeführt werden kann. Das Relaisventil 44 steuert an seinem Auslass 50 genau diesen Steuerdruck aus, jedoch verstärkt das Relaisventil die Luftmenge. D.h. das am Auslass 50 des Relaisventils 44 bereitgestellte Volumen ist signifikant größer als das in der Steuerleitung 60 transportierte Volumen.

Der Druck am Auslass 50 des Relaisventils 44 und damit der Druck, der zu dem Federspeicherbremszylinder 12 geführt werden kann, wird mittels eines Drucksensors 62 gemessen. Dieser Drucksensor 62 liefert - ebenso wie der Drucksensor 32 - ein elektrisches Signal an die elektrische Steuereinheit 28.

Der Steuerdruck am Steuereingang 58 des Relaisventils 44 wird über ein Haltenventil 64 sowie ein Bistabilventil 66 bestimmt. Das Haltenventil 64 ist zu diesem Zweck vor den Steuereingang 58 des Relaisventils 44 geschaltet, so dass die Steuerleitung 60 mittels dieses Haltenventils 64 abgesperrt bzw. geöffnet werden kann.

Das Haltenventil 64 ist als elektrisch betätigbares 2/2-Wege-Magnetventil ausgebildet.

Das Bistabilventil 66 weist einen Einlass 68 auf, der mit dem Anschluss 48 für den Druckluftvorratsbehälter 24 verbunden ist. Ferner weist das Bistabilventil 66 einen Auslass 70 auf, der über einen Druckmittelkanal 72 mit dem Haltenventil in Verbindung steht. Schließlich weist das Bistabilventil 66 eine Entlüftung 74 auf, über die Druckluft entweichen kann.

Das Bistabilventil 66 ist mit einer bistabilen Schaltfunktion mit zwei Schaltzuständen ausgebildet. D.h. das Bistabilventil behält seinen Zustand, auch wenn es nicht mehr bestromt wird.

Im Gegensatz dazu handelt es sich bei dem Haltenventil 64 um ein federbelastetes Ventil, wobei dieses federbelastete Ventil in einem unbestromten Zustand den in Fig. 1 dargestellten ersten Schaltzustand einnimmt, d.h. durchschaltet und dabei die Steuerleitung 60 mit dem Druckmittelkanal 72 verbindet. Demgegenüber sperrt es in einem bestromten, zweiten Schaltzustand ab, so dass der in der Steuerleitung 60 vorhandene Druck und somit der Druck am Steuereingang 58 und auch am Auslass 50 des Relaisventils 44 gehalten wird.

Das Bistabilventil 66 weist einen ersten Schaltzustand auf, in dem Druckluft vom Haltenventil 64 über die Entlüftung 74 abführbar ist. Dieser Schaltzustand ist in Fig. 1 dargestellt. In einem zweiten Schaltzustand des Bistabilventils 66 ist Druckluft vom Druckluftvorratsbehälter 24 zum Halteventil 64 zuführbar.

Im ersten Schaltzustand des Bistabilventils 66 ist daher der Auslass 70 mit der Entlüftung 74 verbunden, während der Auslass 70 gegen den Einlass 68 abgesperrt ist. Im zweiten Schaltzustand ist dagegen der Auslass 70 mit dem Einlass 68 verbunden, während der Auslass 70 gegen die Entlüftung 74 abgesperrt ist

Das Feststellbremsmodul 10 weist ferner eine zweite Ventileinrichtung 76 auf. Diese zweite Ventileinrichtung 76 umfasst ihrerseits wenigstens einen ersten Anschluss 78, der mit dem Anschluss 54 für das Anhängersteuerventil 22 in Verbindung steht. Ferner weist diese zweite Ventileinrichtung 76 einen zweiten Anschluss 80 auf, der mit dem Druckmittelkanal 72 in Verbindung steht und damit mit einem in diesem Druckmittelkanal 72 zwischen dem Atmosphärendruck und dem Druck im Druckluftvorratsbehälter 24 beliebig einstellbarem Druck beaufschlagbar ist.

Die zweite Ventileinrichtung 76 weist wenigstens zwei Schaltzustände auf, wobei im ersten, in Fig. 1 dargestellten, Schaltzustand der erste Anschluss 78 mit dem zweiten Anschluss verbunden ist, während im zweiten Schaltzustand der erste Anschluss 78 gegen den zweiten Anschluss 80 abgesperrt ist. Somit kann die zum Anhängersteuerventil 22 führende Druckluftleitung 20 mittels dieser zweiten Ventileinrichtung 76 abgesperrt werden.

Gemäß der in Fig. 1 dargestellten Ausführung ist die zweite Ventileinrichtung 76 ein elektrisch betätigbares Magnetventil, nämlich ein 2/2-Wege-Magnetventil. Dieses elektrisch betätigbare Magnetventil ist federbelastet und nimmt in einem unbestromten Zustand den ersten Schaltzustand und in einem bestromten Zustand den zweiten Schaltzustand ein.

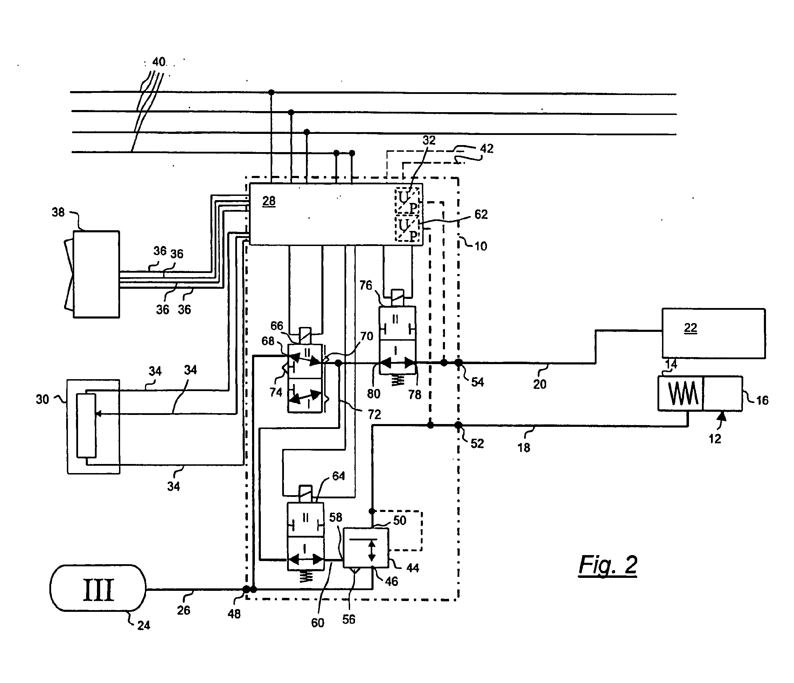

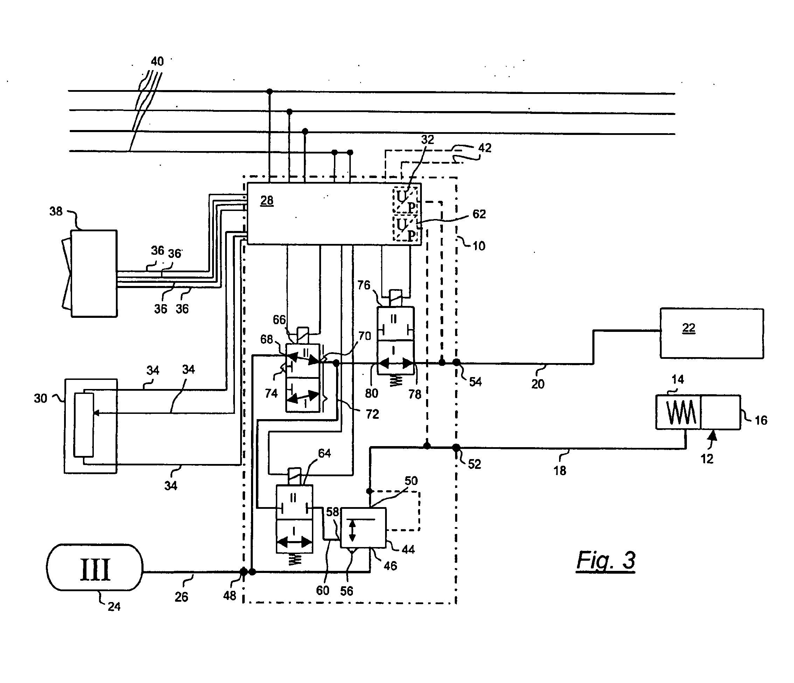

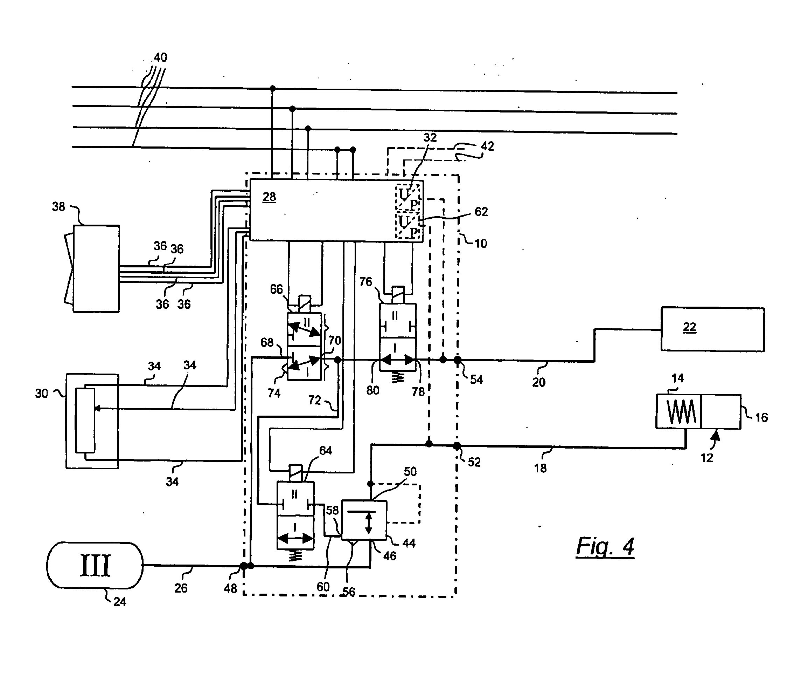

Das dargestellte Feststellbremsmodul 10 ermöglicht eine Umsetzung einer Basisparkbremsfunktion, wie nachfolgend anhand von Fig. 2 erläutert wird, einer Anhängerkontrollfunktion, wie nachfolgend anhand von Fig. 3 erläutert wird, und einer Streckbremsfunktion, wie nachfolgend anhand von Fig. 4 erläutert wird. Die Fig. 1 bis 4 zeigen daher den gleichen Aufbau, jedoch in unterschiedlichen Schaltzuständen der Ventile.

Ferner realisiert das Feststellbremsmodul 10 eine Absicherung der sog. Hill-Holder-Funktion, die insbesondere in Verbindung mit einem elektronischen Bremssystem implementierbar ist. Bei dieser Hill-Holder-Funktion handelt es sich um eine Anfahrhilfe, die ein Anfahren am Hang erleichtert, indem der Druck in der Betriebsbremse gehalten wird, auch wenn der Fahrer die Betriebsbremse nicht (mehr) betätigt.

Fig. 2 zeigt das Feststellbremsmodul 10 gemäß Fig. 1, wobei diese Figur zur Erläuterung der Basisparkbremsfunktion dient. In dem in Fig. 2 dargestellten Zustand wird über das Bistabilventil 66 und das Haltenventil 64 der Vorratsdruck dem Steuereingang 58 des Relaisventils 44 zugeführt und daher am Auslass 50 des Relaisventils 44 ein dem Vorratsdruck entsprechender Druck ausgesteuert, der dann über die Druckluftleitung 18 dem Federspeicherbremszylinder 12 zugeführt wird. Hierdurch wird der Federspeicherteil 14 belüftet und somit die Feststellbremse gelöst.

Gleichzeitig wird in der gezeigten Stellung der Ventile des Feststellbremsmoduls 10 das Anhängersteuerventil 22 ebenfalls belüftet und mit dem Druck der Druckluft aus dem Druckluftvorratsbehälter 24 versorgt. Da jedoch das Anhängersteuerventil 22 an seinem Auslass den an seinem Einlass anliegenden Druck invertiert, ist der Druck am Auslass des Anhängersteuerventils 22 im in Fig. 2 dargestellten Zustand minimal, so dass ein am Anhängersteuerventil 22 angeschlossener Anhänger ungebremst wäre.

Mittels des Haltenventils 64 und der zweiten Ventileinrichtung 76 kann der Druck im Druckmittelkanal 72 begrenzt werden, soweit dies vom Fahrer bzw. vom Bremssystem vorgesehen ist.

Zum Einlegen der Feststellbremse bzw. Parkbremse wird dann das Bistabilventil 66 in seine erste Schaltstellung umgeschaltet, so dass eine Entlüftung des Steuerdrucks am Steuereingang 58 des Relaisventils 44 und somit auch am Auslass 50 des Relaisventils 44 und somit insgesamt auch des Federspeicherteils 14 des Federspeicherbremszylinders 12 eintritt. Die Speicherfeder erzeugt nun einen Druck auf die Radbremsen, so dass das Zugfahrzeug eingebremst wird. Zugleich wird auch der Druck in der Leitung 20 zum Anhängersteuerventil 22 abgebaut, so dass die Betriebsbremse im Anhänger aufgrund der invertierenden Wirkung des Anhängersteuerventils 22 einen Druck in den Bremszylindern des Anhängers und somit eine Bremskraft aufbaut. D.h. auch der Anhänger wird eingebremst, wenn das Bistabilventil 66 auf Entlüften umgeschaltet wird.

Sofern die Hill-Holder-Funktion aktiviert wird, bestromt die Steuereinheit 28 das Haltenventil 64 sowie die zweite Ventileinrichtung 76, so dass beide Ventile 64, 76 sperren. Ferner wird das Bistabilventil 66 in seinen ersten Schaltzustand umgeschaltet, so dass es entlüftet. Falls nun bei aktivierter Hill-Holder-Funktion die elektrische Energieversorgung ausfällt, schalten die federbelasteten Ventile, nämlich das Haltenventil 64 sowie die zweite Ventileinrichtung 76, in die in Fig. 2 dargestellte Grundstellung (jeweils erster Schaltzustand) zurück, so dass diese Ventile geöffnet werden und somit der Federspeicherteil 14 des Federspeicherbremszylinders 12 sowie das Anhängersteuerventil 22 entlüftet werden. Das Fahrzeug wird auf diese Weise über die Feststellbremse des Zugfahrzeuges und die Bremse des Anhängerfahrzeuges sicher gehalten.

Fig. 3 zeigt das Feststellbremsmodul 10 aus Fig. 1 bzw. 2, wobei anhand von Fig. 3 die Anhängerkontrollstellung erläutert wird. Mittels der Anhängerkontrollstellung soll der Fahrer in die Lage versetzt werden, zu prüfen, ob die Feststellbremse, d.h. die Federspeicher des Zugfahrzeuges alleine ausreichen, um den gesamten Fahrzeugzug, bestehend aus Zugfahrzeug und Anhängerfahrzeug, zu halten. Hierzu ist zunächst der Fahrzeugzug anzuhalten und die Feststellbremse bzw. Parkbremse einzulegen. Zu diesem Zweck werden daher sowohl die Federspeicherbremszylinder 12 als auch das Anhängersteuerventil 22 entlüftet. Dadurch wird aber aufgrund der invertierenden Funktion des Anhängersteuerventils auch das Anhängerfahrzeug mittels der Anhängerbremse eingebremst. Um festzustellen, ob das Zugfahrzeug auch einen ungebremsten Anhänger halten kann, muss der Fahrer daher zunächst die Bremse des Anhängerfahrzeuges lösen. Hierzu ist das Anhängersteuerventil 22 zu belüften. Dies ist in Fig. 3 dargestellt.

Zunächst wird der Federspeicherteil 14 des Federspeicherbremszylinders 12 entlüftet, indem das Haltenventil 64 unbestromt und das Bistabilventil 66 in seinen ersten Schaltzustand versetzt wird. Dann wird das Haltenventil 64 bestromt. Es sperrt somit den Steuereingang 58 des Relaisventils 44 ab. Auf diese Weise wird eine Belüftung des Federspeichebremszylinders 12 verhindert. Sodann kann das Bistabilventil 66 in die in Fig. 3 dargestellte Position, d.h. in den zweiten Schaltzustand umgeschaltet werden während die zweite Ventileinrichtung 76 unbestromt ist, so dass der Druck des Druckluftvorratsbehälters 24 zum Anhängersteuerventil 22 geführt wird.

In diesem Zustand ist das Anhängersteuerventil 22 belüftet. Damit sind die Anhängerbremsen gelöst, ohne dabei jedoch die Parkbremse bzw. Feststellbremse des Zugfahrzeugs zu lösen.

Zur Beendigung der Anhängerkontrollstellung wird zunächst das Bistabilventil 66 wieder auf Entlüften, d.h. in den ersten Schaltzustand umgestellt und sodann das Haltenventil 64 geöffnet, d.h. in den unbestromten Zustand versetzt.

Fig. 4 veranschaulicht das Feststellbremsmodul 10 bei aktivierter Streckbremsfunktion. Bei dieser Funktion soll das Anhängerfahrzeug eingebremst werden, während das Zugfahrzeug ungebremst ist. Ein Fahrzeugzug kann somit gewissermaßen gestreckt werden, was bspw. auf Gefällstrecken vorteilhaft ist. Ferner kann eine derartige Streckbremsfunktion sinnvoll bei glatten Fahrbahnen eingesetzt werden. Sie dient auch zum Testen der Bremswirkung des Anhängers. Schließlich kann man mit der Streckbremsfunktion auch die Verbindung des Zugfahrzeugs zum Anhängerfahrzeug prüfen.

Bei aktivierter Streckbremsfunktion wird zunächst die Feststellbremse bzw. Parkbremse gelöst. Dazu wird der Federspeicherbremszylinder 12 belüftet. Sofern der Fahrer nun nur den Anhänger einbremsen möchte, muss das Anhängersteuerventil 22 entlüftet werden. Hierzu wird das Haltenventil 64 bestromt und damit abgesperrt bzw. geschlossen, um die mittels des Federspeicherbremszylinders 12 realisierte Feststellbremse des Zugfahrzeuges gelöst zu halten. Sodann wird das Bistabilventil 66 in die in Fig. 4 dargestellte Position (erster Schaltzustand) umgeschaltet und das Anhängersteuerventil 22 entlüftet, bis entweder der gewünschte Druck oder die gewünschte Fahrzeugverzögerung erreicht ist. Bei Erreichen des gewünschten Wertes kann mittels der zweiten Ventileinrichtung 76 der Druck im Anhängersteuerventil gehalten werden. Variiert der Fahrer seinen Verzögerungswunsch über die elektrische Betätigungseinheit 30, kann der Druck über das Bistabilventil 66 und die zweite Ventileinrichtung 76 entsprechend dem Fahrerwunsch moduliert werden. Sofern die Regelung anhand des Druckes erfolgt, wird der Drucksensor 32 verwendet, der den Druck im Anhängersteuerventil 22 bestimmen kann. In Abhängigkeit des von diesem Drucksensor 32 gemessenen Druckes werden dann das Bistabilventil 66 und die zweite Ventileinrichtung 76 entsprechend geöffnet bzw. geschlossen, bis der gewünschte Druck erreicht ist.

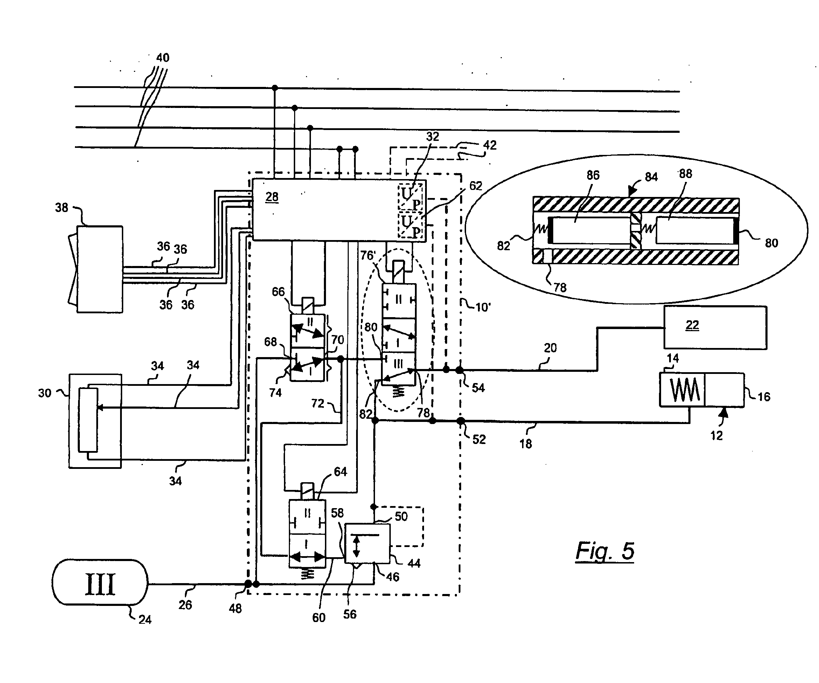

Die Fig. 5 bis 8 zeigen ein weiteres Ausführungsbeispiel eines Feststellbremsmoduls 10 gemäß der Erfindung. Dieses Ausführungsbeispiel gemäß den Fig. 5 bis 8 entspricht im Wesentlichen dem in den Fig. 1 bis 4 gezeigten Ausführungsbeispiel, wobei jedoch die zweite Ventileinrichtung gemäß den Fig. 5 bis 8 abweichend ausgestaltet und daher mit 76' bezeichnet ist.

Die zweite Ventileinrichtung 76' weist neben erstem Anschluss 78 und zweitem Anschluss 80 auch einen dritten Anschluss 82 auf, der mit dem Auslass 50 des Relaisventils 44 in Verbindung steht. Die zweite Ventileinrichtung 76' weist ferner einen dritten Schaltzustand auf, bei dem der erste Anschluss 78 mit dem dritten Anschluss 82 verbunden und der zweite Anschluss 80 von dem ersten Anschluss 78 und dem dritten Anschluss 82 abgesperrt ist. Diese zweite Ventileinrichtung 76' ist als elektrisch betätigbares Doppelankermagnetventil 84 (welches in den Fig. 5 bis 8 zusätzlich separat in einer vereinfachten Schnittansicht dargestellt ist) ausgebildet. Unbestromt nimmt die zweite Ventileinrichtung 76' einen dritten Schaltzustand ein. In diesem dritten Schaltzustand ist der erste Anschluss 78 mit dem dritten Anschluss 82 verbunden und der zweite Anschluss 80 vom ersten Anschluss 78 und vom dritten Anschluss 82 abgesperrt.

Der oben im Zusammenhang mit den Fig. 1 bis 4 erläuterte erste Schaltzustand der zweiten Ventileinrichtung wird bei einem ersten bestromten Zustand der Ventileinrichtung 76' eingenommen. In diesem Zustand ist der erste Anschluss 78 mit dem zweiten Anschluss 80 verbunden, während der zweite Anschluss 80 gegen den ersten Anschluss 78 und den dritten Anschluss 82 abgesperrt ist.

Die zweite Ventileinrichtung 76' nimmt den zweiten Schaltzustand in einem zweiten bestromten Zustand ein, wobei bei diesem Schaltzustand sämtliche Anschlüsse 78, 80 und 82 jeweils gegeneinander abgesperrt sind.

Das Doppelankermagnetventil 84 weist eine nicht dargestellte Spule auf, die bestromt werden kann. Ohne eine Bestromung dieser Spule verbleibt die zweite Ventileinrichtung 76' im dritten Schaltzustand aufgrund der Vorspannung einer Feder. Bei einer Bestromung der Spule mit einem ersten niedrigen Strom gelangt die zweite Ventileinrichtung 76' in den ersten Schaltzustand. Bei Bestromung mit einem höheren Strom als dem vorgenannten Strom gelangt die zweite Ventileinrichtung 76' in den zweiten Schaltzustand.

Das Doppelankermagnetventil 84 weist einen Primäranker 86 sowie einen Sekundäranker 88 auf. Zunächst, d.h. bei einem niedrigen Strom zieht der Primäranker an, während der Sekundäranker 88 im Wesentlichen noch in seiner Ruhestellung verbleibt. Bei Bestromung mit einem höheren Strom zieht jedoch auch der Sekundäranker 88 an, so dass die zweite Ventileinrichtung 76' dann ihren zweiten Schaltzustand einnimmt.

Das in Fig. 5 gezeigte Ausführungsbeispiel erlaubt bei unbestromter zweiter Ventileinrichtung 76' eine Druckansteuerung des Anhängersteuerventils 22 gemäß der Druckansteuerung des Federspeicherbremszylinders 12. D.h. der Federspeicherbremszylinder 12 ist in Bezug auf den Druck mit dem Anhängersteuerventil 22 gekoppelt. Gleichwohl gestattet eine Bestromung dieser zweiten Ventileinrichtung 76' die gleichen Zustände einzustellen, wie dies bei dem in den Fig. 1 bis 4 gezeigten Ausführungsbeispiel möglich ist.

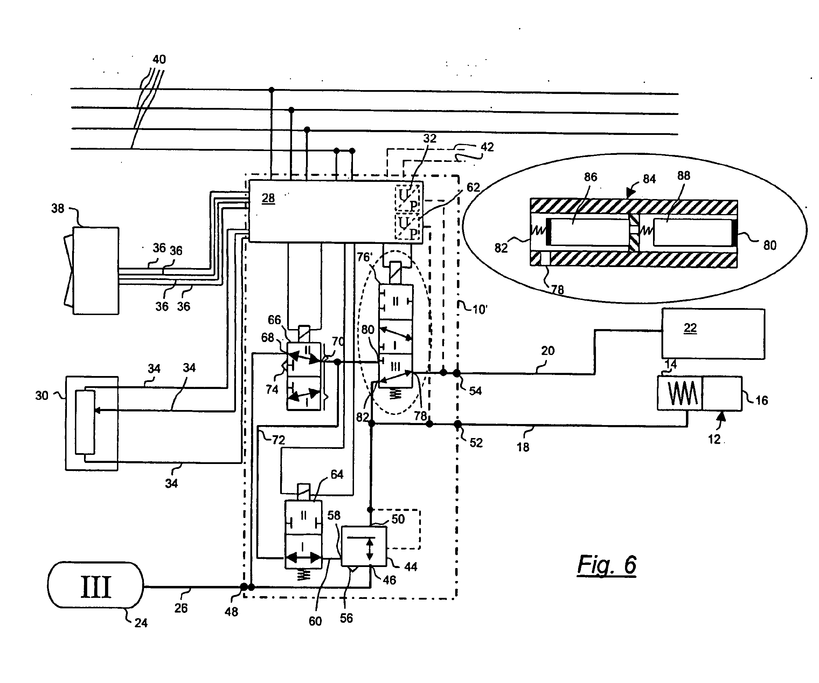

Der Zustand gemäß Fig. 6 entspricht daher im Wesentlichen dem in Fig. 2 gezeigten Zustand, wobei nämlich im unbestromten Zustand des Haltenventils 64 sowie der zweiten Ventileinrichtung 76' am ersten Anschluss 78 der zweiten Ventileinrichtung, d.h. an dem zum Anhängersteuerventil 22 führenden Anschluss der gleiche Druck anliegt wie an dem Auslass 50 des Relaisventils 44 (auch wenn bei dem in Fig. 6 gezeigten Ausführungsbeispiel der erste Anschluss 78 gegen den zweiten Anschluss 80 der zweiten Ventileinrichtung 76' abgesperrt ist).

Zum Einlegen der Parkbremse bzw. Feststellbremse wird das Bistabilventil 66 auf Entlüften, d.h. in den ersten Schaltzustand umgeschaltet, so dass das Fahrzeug eingebremst wird.

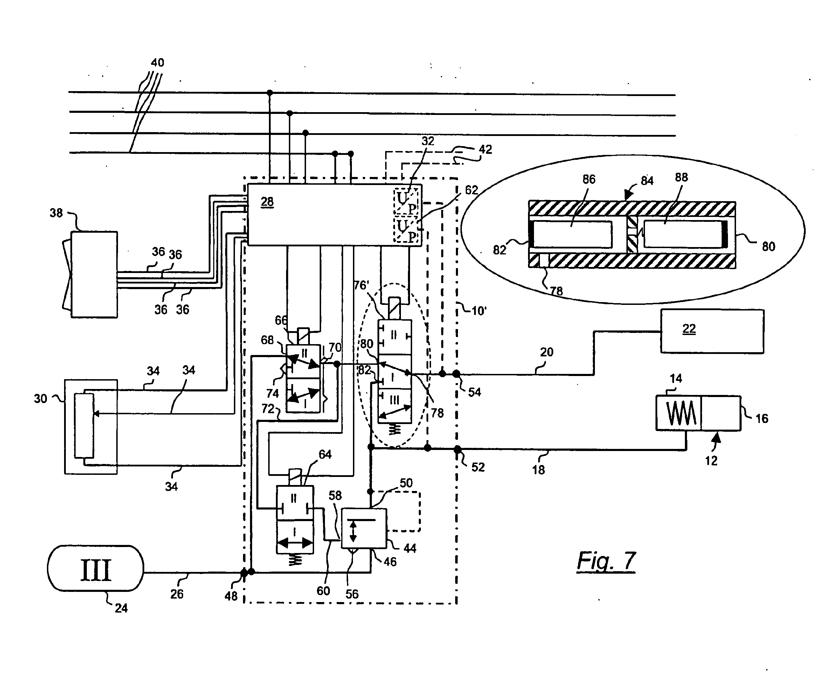

Fig. 7 entspricht dem in Fig. 3 dargestellten Zustand zur Darstellung der Anhängerkontrollstellung. Gemäß Fig. 7 ist hierzu jedoch die zweite Ventileinrichtung 76' In den ersten Schaltzustand versetzt, in dem die Spule des Doppelanker-magnetventils 84 mit einem ersten, niedrigen Strom bestromt wird. Im Übrigen entspricht die Arbeitsweise der Anhängerkontrollstellung gemäß Fig. 7 jedoch der in Fig. 3 erläuterten Arbeitsweise, so dass auf obige Ausführungen verwiesen wird.

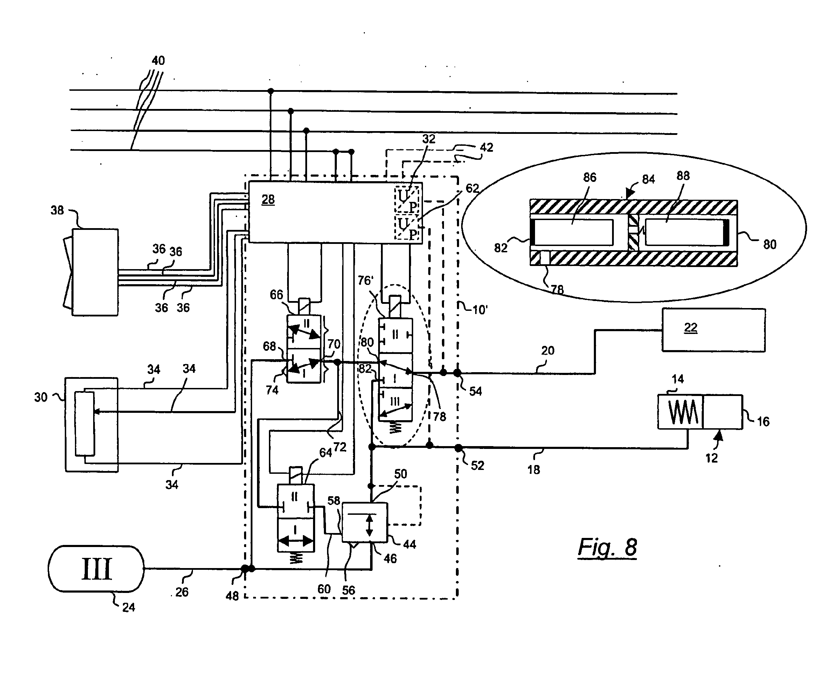

Fig. 8 entspricht wiederum der in Fig. 4 gezeigten Situation zur Erläuterung der Streckbremsfunktion, wobei jedoch wiederum die zweite Ventileinrichtung 76' sich in einem ersten bestromten Zustand mit einem niedrigen Strom befindet, um den ersten Anschluss 78 der zweiten Ventileinrichtung 76' mit dem zweiten Anschluss 80 dieser Ventileinrichtung zu verbinden. Im Übrigen entspricht die Arbeitsweise aber der im Zusammenhang mit Fig. 4 erläuterten Arbeitsweise, so dass auf die obigen Ausführungen zu Fig. 4 verwiesen wird.

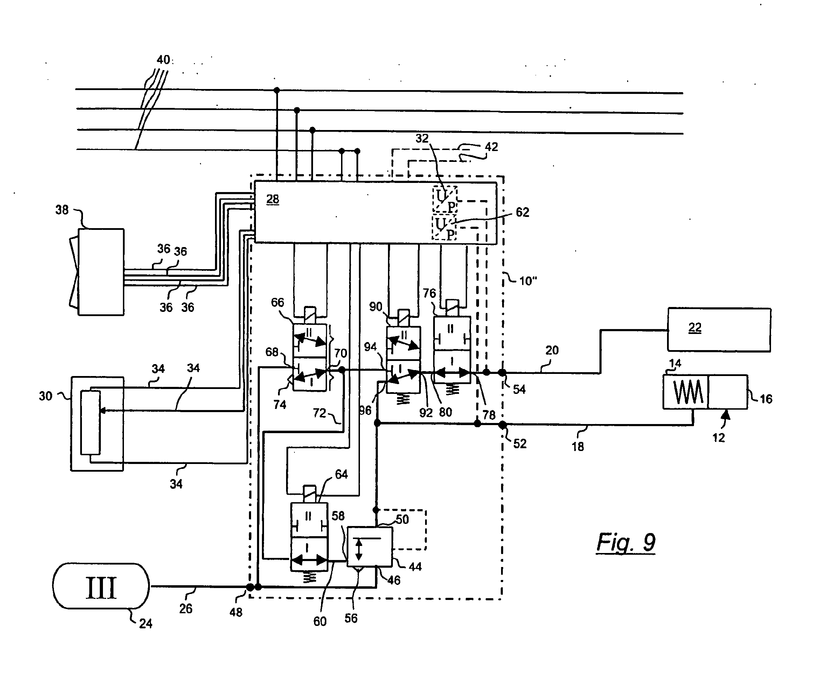

Fig. 9 zeigt ein weiteres Ausführungsbeispiel eines Feststellbremsmoduls 10". Dieses Ausführungsbeispiel entspricht konstruktiv im Wesentlichen dem in den Fig. 1 bis 4 gezeigten Ausführungsbeispiel und funktionell im wesentlichen dem in den Fig. 5 bis 8 gezeigten Ausführungsbeispiel. In diesem Ausführungsbeispiel ist zwischen des zweiten Ventileinrichtung 76, die wie in den Fig. 1 bis 4 ausgebildet ist, und dem Druckmittelkanal 72 bzw. zwishen dem Bistabilventil 66 und dem Relaisventil 44 eine weitere, dritte Ventileinrichtung 90 angeordnet. Diese dritte Ventileinrichtung 90 weist wenigstens zwei Schaltzustände auf, wobei in einem ersten Schaltzustand der zweite Anschluss 80 der zweiten Ventileinrichtung 76 mit dem Auslass 50 des Relaisventils 44 verbunden und gegen den Druckmittelkanal 72 abgesperrt ist. In einem zweiten Schaltzustand dieser dritten Ventileinrichtung ist der zweite Anschluss 80 der zweiten Ventileinrichtung mit dem Druckmittelkanal 72 verbunden und gegen den Auslass des Relaisventils 44 abgesperrt.

Die dritte Ventileinrichtung ist als elektrisch betätigbares, federbelastetes 3/2-Wege-Magnetventil ausgebildet. Aufgrund der Federbelastung nimmt diese dritte Ventileinrichtung 90 in einem unbestromten Zustand den ersten Schaltzustand und im bestromten Zustand den zweiten Schaltzustand ein.

Diese dritte Ventileinrichtung 90 weist einen ersten Anschluss 92, einen zweiten Anschluss 94 und einen dritten Anschluss 96 auf. Im ersten Schaltzustand ist der erste Anschluss 92 mit dem dritten Anschluss 96 verbunden, während der zweite Anschluss 94 gegen den ersten Anschluss 92 und den dritten Anschluss 96 abgesperrt ist. Im zweiten Schaltzustand ist der erste Anschluss 92 mit dem zweiten Anschluss 94 verbunden, während der dritte Anschluss 96 gegen den ersten Anschluss 92 und den zweiten Anschluss 94 abgesperrt ist.

Der erste Anschluss 92 ist mit dem zweiten Anschluss 80 der zweiten Ventileinrichtung verbunden. Der zweite Anschluss 94 ist mit dem Druckmittelkanal 72 verbunden. Der dritte Anschluss 96 ist mit dem Auslass 50 des Relaisventils 44 verbunden.

Durch geeignete Ansteuerung der zweiten Ventileinrichtung 76 sowie der dritten Ventileinrichtung 90 und auch der übrigen Ventile, nämlich insbesondere des Haltenventils 64 sowie des Bistabilventils 66 lassen sich auch bei dieser Ausführung die im Zusammenhang mit den Fig. 1 bis 4 erläuterten Funktionen ausführen.

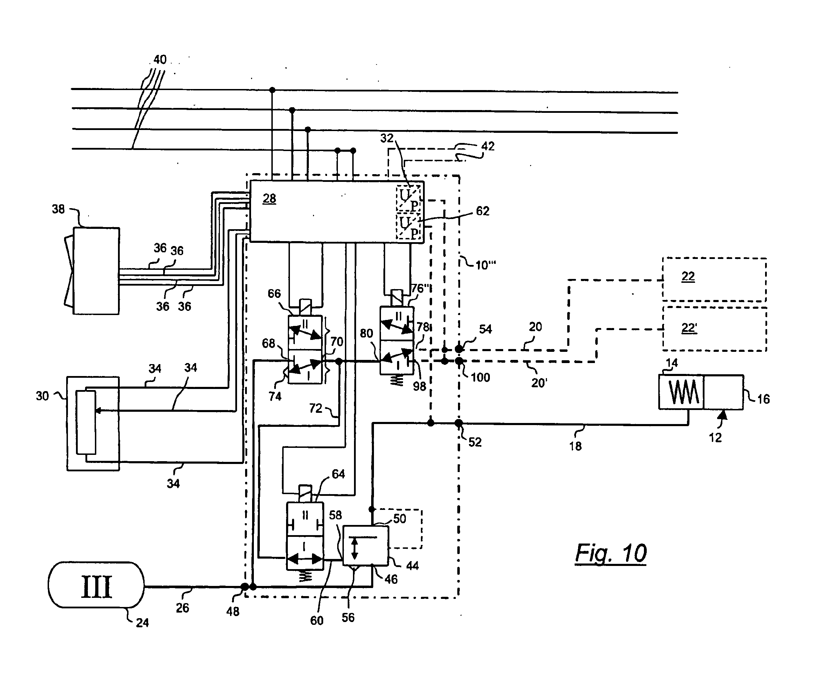

Fig. 10 zeigt ein weiteres Ausführungsbeispiel eines Feststellbremsmoduls 10"'. Bei diesem Ausführungsbeispiel weist die zweite Ventileinrichtung 76'" einen dritten, als weiteren Anhängersteuerventilanschluss dienenden Anschluss 98 auf. Dieser Anschluss 98 ist mit einem weiteren für ein Anhängersteuerventil bestimmten Anschluss 100 am Feststellbremsmodul 10'" verbunden. Im ersten Schaltzustand der zweiten Ventileinrichtung 76'" ist der dritte Anschluss 98 von den anderen beiden Anschlüssen 78, 80 der zweiten Ventileinheit 76'" abgesperrt. Somit ist eine an den dritten Anschluss 98 der zweiten Ventileinrichtung 76'" anschließbare Leitung zu einem Anhängersteuerventil 22' absperrbar.

Demgegenüber ist im zweiten Schaltzustand dieser zweiten Ventileinrichtung 76'" der dritte Anschluss 98 mit dem zweiten Anschluss 80 verbunden. Auf diese Weise ist der Druck für ein an den dritten Anschluss 98 der zweiten Ventileinrichtung 76"' anschließbares Anhängersteuerventil 22' mittels des Feststellbremsmoduls 10"' steuerbar bzw. regelbar.

Die zweite Ventileinrichtung 76'" ist als elektrisch betätigbares 3/2-Wege-Magnetventil ausgebildet.

Im Übrigen entspricht die in Fig. 10 dargestellte Ausführung den in den übrigen Figuren gezeigte Ausführung, so dass auf die obigen Erläuterungen verwiesen wird.

Mittels der in Fig. 10 gezeigten Ausführung lassen sich weitere Parkbremskonzepte mit derselben Ausführung des Feststellbremsmoduls realisieren. Durch die Bereitstellung von zwei Anschlüssen 54, 100 für ein Anhängersteuerventil am Feststellbremsmodul 10"' wird bei Verwendung des Anschlusses 54 für ein Anhängersteuerventil 22 der Anhänger bei abgestelltem Fahrzeug eingebremst. Dies geschieht, indem die Leitung vom Feststellbremsmodul 10"' zum Anhängersteuerventil 22 entlüftet wird. Da das Anhängersteuerventil eine invertierende Funktion ausübt, wird somit ein Druck auf die Betriebsbremse des Anhängers ausgeübt, so dass die Betriebsbremse den Anhänger einbremst. Eine derartige Bremswirkung wird jedoch teilweise als problematisch eingeschätzt. Entweicht nämlich der Druck im Anhänger, kann sich der gesamte Fahrzeugzug in Bewegung setzen, wenn die Bremsen des Zugfahrzeuges nicht ausreichend Bremswirkung entfalten.

Es ist daher in einigen Ländern vorgesehen, dass das Anhängerfahrzeug beim Parken nicht mittels der Betriebsbremse eingebremst werden darf. Auf diese Weise bemerkt der Fahrer gleich beim Abstellen des Fahrzeugzuges, ob die Bremswirkung der Bremsen des Zugfahrzeuges ausreicht. Für diese Regionen wird dann der mit dem dritten Anschluss 98 der zweiten Ventileinrichtung 76"' verbundene Anschluss 100 des Feststellbremsmoduls 10"' zum Anschließen des Anhängersteuerventils 22' verwendet. Dabei wird nämlich der Druck in der Leitung 20' zum Anhängersteuerventil gehalten, da bei unbestromter zweiter Ventileinrichtung 76'" bzw. bei abgestelltem Fahrzeug die zweite Ventileinrichtung 76"' bei Verwendung des Anschlusses 100 die Leitung 20' zum Anhängersteuerventil 22' absperrt. Dadurch wird aufgrund der invertierenden Wirkung des Anhängersteuerventils 22' die Betriebsbremse des Anhängers gelöst. Somit erkennt der Fahrer unmittelbar beim Abstellen des Fahrzeuges, ob die Bremswirkung der Bremsen des Zugfahrzeuges ausreichend sind, um den gesamten Fahrzeugzug halten zu können.

Das in Fig. 10 gezeigte Ausführungsbeispiel lässt sich somit für unterschiedliche Parkbrems- bzw. Feststellbremskonzepte verwenden, nämlich solche, bei denen entweder das Anhängerfahrzeug bei abgestelltem Fahrzeugzug eingebremst oder nicht eingebremst wird. Insgesamt kann somit die Konstruktion von Feststellbremsmodulen vereinheitlicht werden, was die Verwaltung der auszuwählenden Komponenten bei der Fahrzeugkonfiguration sowie auch die Ersatzteilverwaltung erheblich vereinfacht. Es ergibt sich eine Einsparung bei der Produktion derartiger Feststellbremsmodule sowie der Verwaltung der entsprechenden Teilenummern.

## Patentansprüche

1. Feststellbremsmodul für eine druckmittelbetriebene Bremsanlage eines Fahrzeugs mit einer Feststellbremsfunktion mittels wenigstens eines Federspeicherbremszylinders (12), wobei das Feststellbremsmodul (10) aufweist:
a) eine erste, druckmittelmengenverstärkende Ventileinrichtung (44) mit einem Einlass (46), der mit einem Druckmittelvorratsbehälter (24) verbindbar ist, einem Auslass (50), der mit wenigstens einem Federspeicherteil (14) eines Federspeicherbremszylinders (12) verbindbar ist, und einem mit einer Steuerleitung (60) verbundenen Steuereingang (58),
b) ein elektrisch betätigbares Haltenventil (64), das vor den Steuereingang (58) der druckmittelmengenverstärkenden Ventileinrichtung (44) geschaltet und mit dem die Steuerleitung (60) absperrbar ist,
c) ein weiteres, elektrisch betätigbares Ventil (66) mit zwei Schaltzuständen, das einen mit dem Druckmittelvorratsbehälter (24) verbindbaren Einlass (68) und einen über einen Druckmittelkanal (72) mit dem Haltenventil (64) in Verbindung stehenden Auslass (70) aufweist, wobei im ersten Schaltzustand Druckmittel vom Haltenventil (64) abführbar und im zweiten Schaltzustand Druckmittel zum Haltenventil (64) zuführbar ist, und
d) eine zweite, elektrisch betätigbare Ventileinrichtung (76) mit wenigstens einem ersten, als Anhängersteuerventil-Anschluss dienenden Anschluss (78), der mit einem Anhängersteuerventil (22) zum Steuern einer Anhängerbremse verbindbar ist,
**dadurch gekennzeichnet, dass**
e) die zweite Ventileinrichtung (76) einen zweiten Anschluss (80) aufweist, der mit dem Druckmittelkanal (72) in Verbindung steht oder verbindbar ist,f) wobei ein am ersten Anschluss (78) der zweiten Ventileinrichtung (76) herrschender Druck unabhängig vom Druck im Druckmittelvorratsbehälter (24) sowie von einem am Auslass (50) der druckmittelmengenverstärkenden Ventileinrichtung (44) herrschenden Druck einstellbar ist.

2. Feststellbremsmodul nach Anspruch 1, **dadurch gekennzeichnet, dass** das weitere Ventil ein Bistabilventil (66) mit einer bistabilen Schaltfunktion ist.

3. Feststellbremsmodul nachAnspruch 1 oder 2, **dadurch gekennzeichnet, dass** die zweite Ventileinrichtung (76) wenigstens zwei Schaltzustände aufweist und im ersten Schaltzustand der erste Anschluss (78) der zweiten Ventileinrichtung (76) mit dem zweiten Anschluss (80) der zweiten Ventileinrichtung (76) verbunden ist und im zweiten Schaltzustand der erste Anschluss (78) der zweiten Ventileinrichtung (76) gegen den zweiten Anschluss (80) der zweiten Ventileinrichtung (76) abgesperrt und somit eine an den ersten Anschluss (78) der zweiten Ventileinrichtung (76) anschließbare Leitung (20) zum Anhängersteuerventil (22) absperrbar ist.

4. Feststellbremsmodul nach einem der vorhergehenden Ansprüche, **dadurch gekennzeichnet, dass** die zweite Ventileinrichtung (76) ein elektrisch betätigbares Magnetventil, insbesondere ein 2/2-Wege-Magnetventil, ist.

5. Feststellbremsmodul nach Anspruch 4, **dadurch gekennzeichnet, dass** die zweite Ventileinrichtung (76) im unbestromten Zustand den ersten Schaltzustand und im bestromten Zustand den zweiten Schaltzustand einnimmt.

6. Feststellbremsmodul nach einem der Ansprüche 1 bis 3, **dadurch gekennzeichnet, dass** die zweite Ventileinrichtung (76') einen dritten Anschluss (82) aufweist, der mit dem Auslass (50) der druckmittelmengenverstärkenden Ventileinrichtung (44) in Verbindung steht, wobei in einem dritten Schaltzustand der erste Anschluss (78) der zweiten Ventileinrichtung (76') mit dem dritten Anschluss (82) der zweiten Ventileinrichtung (76') verbunden ist und der zweite Anschluss (80) der zweiten Ventileinrichtung (76') gegen deren ersten (78) und dritten (82) Anschluss abgesperrt ist.

7. Feststellbremsmodul nach Anspruch 6, **dadurch gekennzeichnet, dass** die zweite Ventileinrichtung (76') ein elektrisch betätigbares Doppelankermagnetventil (84) ist.

8. Feststellbremsmodul nach Anspruch 6 oder 7, **dadurch gekennzeichnet, dass** die zweite Ventileinrichtung (76')
a) den ersten Schaltzustand in einem ersten bestromten Zustand einnimmt.
b) den zweiten Schaltzustand in einem zweiten bestromten Zustand einnimmt, bei dem ein Strom durch eine Spule des Doppelankermagnetventils (84) größer ist als beim ersten bestromten Zustand, und
c) den dritten Schaltzustand im unbestromten Zustand einnimmt.

9. Feststellbremsmodul nach einem der Ansprüche 1 bis 5, dadurch_gekennzeichnet, dass zwischen dem zweiten Anschluss (80) der zweiten Ventileinrichtung (76) und dem Auslass (50) der druckmittelmengenverstärkenden Ventileinrichtung (44) sowie dem Druckmittelkanal (72) eine dritte Ventileinrichtung (90) mit wenigstens zwei Schaltzuständen angeordnet ist, wobei in einem ersten Schaltzustand der zweite Anschluss (80) der zweiten Ventileinrichtung (76) mit dem Auslass der druckmittelmengenverstärkenden Ventileinrichtung (50) verbunden und gegen den Druckmittelkanal (72) abgesperrt ist und in einem zweiten Schaltzustand der zweite Anschluss (80) der zweiten Ventileinrichtung (76) mit dem Druckmittelkanal (72) verbunden und gegen den Auslass (50) der druckmittelmengenverstärkenden Ventileinrichtung (44) abgesperrt ist.

10. Feststellbremsmodul nach Anspruch 9, **dadurch gekennzeichnet, dass** die dritte Ventileinrichtung (90) ein elektrisch betätigbares 3/2-Wege-Magnetventil ist.

11. Feststellbremsmodul nach Anspruch 9 oder 10, **dadurch gekennzeichnet, dass** die dritte Ventileinrichtung (90) im unbestromten Zustand den ersten Schaltzustand und im bestromten Zustand den zweiten Schaltzustand einnimmt.

12. Feststellbremsmodul nach einem der Ansprüche 1 bis 3, **dadurch gekennzeichnet, dass** die zweite Ventileinrichtung (76"') einen dritten, als weiteren Anhängersteuerventil-Anschluss dienenden Anschluss (98) aufweist, der ebenfalls mit einem Anhängersteuerventil (22') verbindbar ist, wobei im ersten Schaltzustand der dritte Anschluss (98) von den anderen Anschlüssen (78, 80) der zweiten Ventileinrichtung (76"') abgesperrt und somit eine an dem dritten Anschluss (98) anschließbare Leitung zum Anhängersteuerventil (22') absperrbar ist, und im zweiten Schaltzustand der dritte Anschluss (98) mit dem zweiten Anschluss (80) verbunden ist.

13. Feststellbremsmodul nach Anspruch 12, **dadurch gekennzeichnet, dass** die zweite Ventileinrichtung (76"') ein 3/2-Wege-Magnetventill ist.

14. Feststellbremsmodul nach einem der vorhergehenden Ansprüche, **gekennzeichnet durch** eine elektrische Steuereinheit (28) mittels der das Haltenventil (64), das weitere Ventil bzw. Bistabilventil (66) und die zweite (76) und ggf. dritte (90) Ventileinrichtung elektrisch betätigbar sind.

15. Feststellbremsmodul nach Anspruch 14, **dadurch gekennzeichnet, dass** die elektrische Steuereinheit (28) elektrische Anschlüsse für eine elektrische Betätigungseinheit (30) zum Betätigen von Anhängerbremsen mittels des Anhängersteuerventils (22) aufweist, wobei mittels der elektrischen Steuereinheit (30) das Haltenventil (64), das weitere Ventil bzw. Bistabilventil (66) und die zweite (76) und ggf. dritte (90) Ventileinrichtung in Abhängigkeit von einem von der Betätigungseinheit (30) erzeugbaren elektrischen Signal steuerbar sind.

16. Feststellbremsmodul nach einem der vorhergehenden Ansprüche, **gekennzeichnet durch** einen Drucksensor (32), der mit dem ersten Anschluss (78) der zweiten Ventileinrichtung (76) in Verbindung steht zum Messen des Druckes, der vom ersten Anschluss (78) der zweiten Ventileinrichtung (76) zum Anhängersteuerventil (22) führbar ist.

17. Feststellbremsmodul nach einem der vorhergehenden Ansprüche, **gekennzeichnet durch** einen Drucksensor (62), der mit dem Auslass (50) der druckmittelmengenverstärkenden Ventileinrichtung (50) in Verbindung steht zum Messen des Druckes, der zum Federspeicherbremszylinder (12) führbar ist.

18. Feststellbremsmodul nach einem der vorhergehenden Ansprüche, **dadurch gekennzeichnet, dass** die druckmittelmengenverstärkende Ventileinrichtung ein Relaisventil (44) ist.

## Claims

1. Parking brake module for a pressure-medium-operated brake system of a vehicle having a parking brake function by means of at least one spring-type brake cylinder (12), wherein the parking brake module (10) has:
a) a first, pressure-medium-quantity-boosting valve device (44) with an inlet (46), which can be connected to a pressure medium reservoir vessel (24), an outlet (50), which can be connected to at least one spring-loaded component (14) of a spring-type brake cylinder (12), and a control input (58), which is connected to a control line (60),
b) an electrically activated pressure-holding valve (64) which is connected upstream of the control inlet (58) of the pressure-medium-quantity-boosting valve device (44) and with which the control line (60) can be shut off,
c) a further electrically activated valve (66) which has two switched states and comprises an inlet (68) which can be connected to the pressure medium reservoir vessel (24) and an outlet (70) which is connected to the pressure-holding valve (64) via a pressure medium duct (72), wherein in the first switched state pressure medium can be carried away from the pressure-holding valve (64), and in the second switched state pressure medium can be fed to the pressure-holding valve (64), and
d) a second electrically activated valve device (76) with at least a first port (78), which serves as a trailer monitoring valve port and can be connected to a trailer monitoring valve (22) in order to control a trailer brake,
**characterized in that**
e) the second valve device (76) has a second port (80) which is or can be connected to the pressure medium duct (72),
f) wherein a pressure prevailing at the first port (78) of the second valve device (76) can be set independently of the pressure in the pressure medium reservoir vessel (24) as well as of a pressure prevailing at the outlet (50) of the pressure-medium-quantity-boosting valve device (44).

2. Parking brake module according to Claim 1, **characterized in that** the further valve is a bistable valve (66) with a bistable switching function.

3. Parking brake module according to Claim 1 or 2, **characterized in that** the second valve device (76) has at least two switched states, and in the first switched state the first port (78) of the second valve device (76) is connected to the second port (80) of the second valve device (76), and in the second switched state the first port (78) of the second valve device (76) is shut off from the second port (80) of the second valve device (76) and a line (20) which can be connected to the first port (78) of the second valve device (76) and which leads to the trailer monitoring valve (22) can therefore be shut off.

4. Parking brake module according to one of the preceding claims, **characterized in that** the second valve device (76) is an electrically activated solenoid valve, in particular a 2/2 way solenoid valve.

5. Parking brake module according to Claim 4, **characterized in that** the second valve device (76) assumes the first switched state in the deenergized state and the second switched state in the energized state.

6. Parking brake module according to one of Claims 1 to 3, **characterized in that** the second valve device (76') has a third port (82) which is connected to the outlet (50) of the pressure-medium-quantity-boosting valve device (44), wherein in a third switched state the first port (78) of the second valve device (76') is connected to the third port (82) of the second valve device (76'), and the second port (80) of the second valve device (76') is shut off from its first port (78) and third port (82).

7. Parking brake module according to Claim 6, **characterized in that** the second valve device (76') is an electrically activated double-armature solenoid valve (84).

8. Parking brake module according to Claim 6 or 7, **characterized in that** the second valve device (76')
a) assumes the first switched state in a first energized state,
b) assumes the second switched state in a second energized state, in which a current of a coil of the double-armature solenoid valve (84) is higher than in the first energized state, and
c) assumes the third switched state in the deenergized state.

9. Parking brake module according to one of Claims 1 to 5, **characterized in that** a third valve device (90) with at least two switched states is arranged between the second port (80) of the second valve device (76) and the outlet (50) of the pressure-medium-quantity-boosting valve device (44), and the pressure medium duct (72), wherein in a first switched state the second port (80) of the second valve device (76) is connected to the outlet of the pressure-medium-quantity-boosting valve device (44) and is shut off from the pressure medium duct (72), and in a second switched state the second port (80) of the second valve device (76) is connected to the pressure medium duct (72) and is shut off from the outlet (50) of the pressure-medium-quantity-boosting valve device (44).

10. Parking brake module according to Claim 9, **characterized in that** the third valve device (90) is an electrically activate 3/2 way solenoid valve.

11. Parking brake module according to Claim 9 or 10, **characterized in that** the third valve device (90) assumes the first switched state in the deenergized state and the second switched state in the energized state.

12. Parking brake module according to one of Claims 1 to 3, **characterized in that** the second valve device (76''') has a third port (98) which serves as a further trailer monitoring valve port and can also be connected to a trailer monitoring valve (22'), wherein in the first switched state the third port (98) is shut off from the other ports (78, 80) of the second valve device (76'''), and therefore a line which can be connected to the third port (98) and which leads to the trailer monitoring valve (22') can be shut off, and in the second switched state the third port (98) is connected to the second port (80).

13. Parking brake module according to Claim 12, **characterized in that** the second valve device (76''') is a 3/2 way solenoid valve.

14. Parking brake module according to one of the preceding claims, **characterized by** an electrical control unit (28) by means of which the pressure-holding valve (64), the further valve or bistable valve (66) and the second valve device (76) and, if appropriate, third valve device (90) can be activated electrically.

15. Parking brake module according to Claim 14, **characterized in that** the electrical control unit (28) has electrical terminals for an electrical activation unit (30) for activating trailer brakes by means of the trailer monitoring valve (22), wherein the electrical control unit (28) can be used to control the pressure-holding valve (64), the further valve or bistable valve (66), and the second valve device (76) and, if appropriate, third valve device (90) as a function of an electrical signal which can be generated by the activation unit (30).

16. Parking brake module according to one of the preceding claims, **characterized by** a pressure sensor (32) which is connected to the first port (78) of the second valve device (76) in order to measure the pressure which can be conducted from the first port (78) of the second valve device (76) to the trailer monitoring valve (22).

17. Parking brake module according to one of the preceding claims, **characterized by** a pressure sensor (62) which is connected to the outlet (50) of the pressure-medium-quantity-boosting valve device (44) in order to measure the pressure which can be conducted to the spring-type brake cylinder (12).

18. Parking brake module according to one of the preceding claims, **characterized in that** the pressure-medium-quantity-boosting valve device is a relay valve (44).

## Revendications

1. Module de frein de stationnement pour un dispositif de freinage actionné par un fluide sous pression d'un véhicule comprenant une fonction de frein de stationnement au moyen d'au moins un cylindre de frein à ressort accumulateur (12), le module de frein de stationnement (10) comprenant :
a) un premier dispositif de soupape (44) augmentant la quantité de fluide sous pression, comprenant une entrée (46) qui peut être reliée à un réservoir de fluide sous pression (24), une sortie (50) qui peut être reliée à au moins une partie d'accumulateur à ressort (14) d'un cylindre de frein à ressort accumulateur (12), et une entrée de commande (58) reliée à une conduite de commande (60),
b) une soupape de maintien (64) actionnable électriquement qui est connectée avant l'entrée de commande (58) du dispositif de soupape (44) augmentant la quantité de fluide sous pression et à l'aide de laquelle la conduite de commande (60) peut être fermée,
c) une soupape supplémentaire (66) actionnable électriquement présentant deux états de commutation, laquelle soupape supplémentaire comprend une entrée (68) pouvant être reliée au réservoir de fluide sous pression (24) et une sortie (70) en liaison avec la soupape de maintien (64) par le biais d'un canal de fluide sous pression (72), du fluide sous pression pouvant être évacué de la soupape de maintien (64) dans le premier état de commutation et du fluide sous pression pouvant être acheminé jusqu'à la soupape de maintien (64) dans le deuxième état de commutation et
d) un deuxième dispositif de soupape (76) actionnable électriquement comprenant au moins un premier raccord (78) servant de raccord de soupape de commande de remorque, lequel raccord peut être relié à une soupape de commande de remorque (22) pour commander un frein de remorque,
**caractérisé en ce que**
e) le deuxième dispositif de soupape (76) comprend un deuxième raccord (80) qui est en liaison avec le canal de fluide sous pression (72) ou peut être relié à celui-ci,
f) une pression régnant au niveau du premier raccord (78) du deuxième dispositif de soupape (76) pouvant être ajustée indépendamment de la pression dans le réservoir de fluide sous pression (24) ainsi que d'une pression régnant au niveau de la sortie (50) du dispositif de soupape (44) augmentant la quantité de fluide sous pression.

2. Module de frein de stationnement selon la revendication 1, **caractérisé en ce que** la soupape supplémentaire est une soupape bistable (66) présentant une fonction de commutation bistable.

3. Module de frein de stationnement selon la revendication 1 ou 2, **caractérisé en ce que** le deuxième dispositif de soupape (76) présente au moins deux états de commutation et, dans le premier état de commutation, le premier raccord (78) du deuxième dispositif de soupape (76) est relié au deuxième raccord (80) du deuxième dispositif de soupape (76) et, dans le deuxième état de commutation, le premier raccord (78) du deuxième dispositif de soupape (76) est fermé par rapport au deuxième raccord (80) du deuxième dispositif de soupape (76) et, par conséquent, une conduite (20), menant à la soupape de commande de remorque (22) et pouvant être raccordée au premier raccord (78) du deuxième dispositif de soupape (76), peut être fermée.

4. Module de frein de stationnement selon l'une quelconque des revendications précédentes, **caractérisé en ce que** le deuxième dispositif de soupape (76) est une électrovanne actionnable électriquement, en particulier une électrovanne 2/2 voies.

5. Module de frein de stationnement selon la revendication 4, **caractérisé en ce que** le deuxième dispositif de soupape (76) occupe, à l'état non alimenté en courant électrique, le premier état de commutation et occupe, à l'état alimenté en courant électrique, le deuxième état de commutation.

6. Module de frein de stationnement selon l'une quelconque des revendications 1 à 3, **caractérisé en ce que** le deuxième dispositif de soupape (76') comprend un troisième raccord (82) qui est en liaison avec la sortie (50) du dispositif de soupape (44) augmentant la quantité de fluide sous pression et, dans un troisième état de commutation, le premier raccord (78) du deuxième dispositif de soupape (76*'*) étant relié au troisième raccord (82) du deuxième dispositif de soupape (76*'*) et le deuxième raccord (80) du deuxième dispositif de soupape (76*'*) étant fermé par rapport au premier (78) et au troisième (82) raccord.

7. Module de frein de stationnement selon la revendication 6, **caractérisé en ce que** le deuxième dispositif de soupape (76*'*) est une électrovanne à double armature (84) actionnable électriquement.

8. Module de frein de stationnement selon la revendication 6 ou 7, **caractérisé en ce que** le deuxième dispositif de soupape (76')
a) occupe le premier état de commutation dans un premier état alimenté en courant électrique,
b) occupe le deuxième état de commutation dans un deuxième état alimenté en courant électrique, dans lequel un courant à travers une bobine de l'électrovanne à double armature (84) est supérieur au courant dans le premier état alimenté en courant électrique et
c) occupe le troisième état de commutation dans l'état non alimenté en courant électrique.

9. Module de frein de stationnement selon l'une quelconque des revendications 1 à 5, **caractérisé en ce qu'**entre le deuxième raccord (80) du deuxième dispositif de soupape (76) et la sortie (50) du dispositif de soupape (44) augmentant la quantité de fluide sous pression ainsi que le canal de fluide sous pression (72), est disposé un troisième dispositif de soupape (90) présentant au moins deux états de commutation et, dans un premier état de commutation, le deuxième raccord (80) du deuxième dispositif de soupape (76) étant relié à la sortie du dispositif de soupape (44) augmentant la quantité de fluide sous pression et étant fermé par rapport au canal de fluide sous pression (72) et, dans un deuxième état de commutation, le deuxième raccord (80) du deuxième dispositif de soupape (76) étant relié au canal de fluide sous pression (72) et étant fermé par rapport à la sortie (50) du dispositif de soupape (44) augmentant la quantité de fluide sous pression.

10. Module de frein de stationnement selon la revendication 9, **caractérisé en ce que** le troisième dispositif de soupape (90) est une électrovanne 3/2 voies actionnable électriquement.

11. Module de frein de stationnement selon la revendication 9 ou 10, **caractérisé en ce que** le troisième dispositif de soupape (90) occupe le premier état de commutation dans l'état non alimenté en courant électrique et occupe le deuxième état de commutation dans l'état alimenté en courant électrique.

12. Module de frein de stationnement selon l'une quelconque des revendications 1 à 3, **caractérisé en ce que** le deuxième dispositif de soupape (76*'''*) comprend un troisième raccord (98) servant de raccord de soupape de commande de remorque supplémentaire, lequel raccord peut également être relié à une soupape de commande de remorque (22'), le troisième raccord (98) étant fermé par rapport aux autres raccords (78, 80) du deuxième dispositif de soupape (76*'''*) dans le premier état de commutation et, par conséquent, une conduite, menant à la soupape de commande de remorque (22') et pouvant être raccordée au troisième raccord (98), pouvant être fermée et le troisième raccord (98) étant relié au deuxième raccord (80) dans le deuxième état de commutation.

13. Module de frein de stationnement selon la revendication 12, **caractérisé en ce que** le deuxième dispositif de soupape (76*'''*) est une électrovanne 3/2 voies.

14. Module de frein de stationnement selon l'une quelconque des revendications précédentes, **caractérisé par** une unité de commande électrique (28) au moyen de laquelle la soupape de maintien (64), la soupape supplémentaire ou soupape bistable (66) et le deuxième (76) et éventuellement le troisième (90) dispositif de soupape peuvent être actionnés électriquement.

15. Module de frein de stationnement selon la revendication 14, **caractérisé en ce que** l'unité de commande électrique (28) comprend des raccords électriques pour une unité d'actionnement électrique (30) pour actionner des freins de remorque au moyen de la soupape de commande de remorque (22), la soupape de maintien (64), la soupape supplémentaire ou soupape bistable (66) et le deuxième (76) et éventuellement le troisième (90) dispositif de soupape pouvant, au moyen de l'unité de commande électrique (28), être commandés en fonction d'un signal électrique pouvant être généré par l'unité d'actionnement (30).

16. Module de frein de stationnement selon l'une quelconque des revendications précédentes, **caractérisé par** un capteur de pression (32), qui est en liaison avec le premier raccord (78) du deuxième dispositif de soupape (76), pour mesurer la pression qui peut être menée du premier raccord (78) du deuxième dispositif de soupape (76) jusqu'à la soupape de commande de remorque (22).

17. Module de frein de stationnement selon l'une quelconque des revendications précédentes, **caractérisé par** un capteur de pression (62), qui est en liaison avec la sortie (50) du dispositif de soupape (44) augmentant la quantité de fluide sous pression, pour mesurer la pression qui peut être menée jusqu'au cylindre de frein à ressort accumulateur (12).

18. Module de frein de stationnement selon l'une quelconque des revendications précédentes, **caractérisé en ce que** le dispositif de soupape augmentant la quantité de fluide sous pression est une soupape-relais (44).
